# EUROPÄISCHE PATENTSCHRIFT

(11) **EP 4 243 222 B1**
(45) Veröffentlichungstag und Bekanntmachung des Hinweises auf die Patenterteilung: **15.05.2024**
(21) Anmeldenummer: 22161157.7
(22) Anmeldetag: 09.03.2022
(51) Int. Cl.: H01R 43/048, H01R 43/042, G01L 5/00, B30B 15/00

(54) **CRIMPZANGEN-KRAFTSENSOR UND CRIMPZANGE**
CRIMPING TOOL FORCE SENSOR AND CRIMPING TOOL
CAPTEUR DE PUISSANCE DE PINCE À SERTIR ET PINCE À SERTIR

(43) Veröffentlichungstag der Anmeldung: 13.09.2023
(73) Patentinhaber: WEZAG GmbH & Co. KG, 35260 Stadtallendorf (DE)
(72) Erfinder: Schönfeld, Lothar, 35260 Stadtallendorf (DE); Lepa, Jan, 35037 Marburg (DE)
(74) Vertreter: REHBERG HÜPPE + PARTNER

(56) Entgegenhaltungen:
- US-A1- 2021 140 840

## Beschreibung

### TECHNISCHES GEBIET DER ERFINDUNG

Die Erfindung betrifft eine Crimpzange, in der mittels eines Kraftsensors die während eines Crimpvorgangs wirkende Crimpkraft gemessen wird. Dies kann beispielsweise zur Überwachung des Crimpprozesses, für eine Qualitätssicherung und/oder für eine Dokumentation des Crimpprozesses erfolgen. Insbesondere betrifft die Erfindung einen Crimpzangen-Kraftsensor.

Manuell betätigte Crimpzangen der hier vorliegenden Art dienen zum Verpressen eines Werkstücks (insbesondere eines Steckers mit einem elektrischen Kabel). Eine Crimpzange kann dabei grundsätzlich gemäß der nicht vorveröffentlichten europäischen Patentanmeldung EP 16 156 231.9 oder einer der Druckschriften EP 3 012 924 A1, EP 3 012 923 A1, EP 2 698 885 A1, EP 2 672 580 A1, EP 2 463 969 A2, DE 37 08 727 C2, DE 40 23 337 C1, DE 40 26 332 C2, DE 40 39 435 C1, DE 42 41 224 C1, DE 44 27 553 C2, DE 197 13 580 C2, DE 197 53 436 C2, DE 198 02 287 C1, DE 198 07 737 C2, DE 298 03 336 U1, DE 198 32 884 C1, DE 100 56 900 C1, DE 101 32 413 C2, DE 101 40 270 B4, DE 102 42 345 B3, DE 10 2005 003 615 B3, DE 10 2005 003 617 B3, DE 10 2007 038 626 B3, DE 10 2008 003 524 B4, DE 10 2008 012 011 B3, DE 20 2008 003 703 U1, EP 1 724 101 A1, EP 2 305 428 A1, DE 10 2010 061 148 A1, DE 10 2001 052 967 B4 oder entsprechend den vor dem Anmeldetag der vorliegenden Patentanmeldung seitens der Anmelderin vertriebenen Crimphandwerkzeugen mit den Kennzeichnungen CS10, CSV10, CSV10-LWL, CSV10-FFC, AE, CS8, CK100, CS30, CS KTVR, CE/CG, CS150, CS200, CS210, CP600 ausgebildet sein.

Die Crimpzange dient insbesondere einerseits einer Herstellung einer dauerhaften mechanischen Verbindung zwischen dem Stecker und dem Kabel im Bereich der Isolation des Kabels mittels eines Isolationscrimps und andererseits einer Gewährleistung einer dauerhaften elektrischen Kontaktierung zwischen dem Stecker und dem elektrischen Leiter des Kabels mittels eines Leitercrimps. Je nach zum Einsatz kommendem Profil der Gesenke können unterschiedliche Crimpvorgänge mit der Crimpzange ausgeführt werden.

Beispielsweise kann es sich bei dem Leitercrimp um einen geschlossenen Crimp handeln, bei dem das Kabel in eine geschlossene Crimpzone eines Steckers oder in eine geschlossene Hülse eingeführt wird und durch plastische Verformung der Crimpzone oder der Hülse vercrimpt wird. Möglich ist aber auch, dass ein offener Crimp erzeugt wird, bei dem der Stecker eine offene Crimpzone aufweist, in das Kabel von oben eingelegt werden kann. Um lediglich einige, die Erfindung nicht beschränkende Beispiele zu nennen, können mit dem hier einschlägigen Crimpwerkzeug
- Kabelschuhe nach DIN 4623,
- Aluminiumverbinder nach DIN 46329
- Aluminium-Presskabelschuhe nach DIN 48201
- Quetschkabelschuhe nach DIN 46234,
- Stiftkabelschuhe nach DIN 46230 oder
- Verbinder, Stecker oder Kabelschuhe für eine Verbindung mit einem Kabel, wie diese in dem Produktkatalog der WEZAG GmbH Werkzeugfabrik "Werkzeuge für die professionelle Anwendung" mit der Veröffentlichungs-Nr. 10/11 beschrieben sind,
vercrimpt werden.

Bei dem hergestellten Crimp kann es sich beispielsweise für einen geschlossenen Crimp um einen Sechskant- oder Hexagonalcrimp, einen Vierkantcrimp, einen B-Crimp, einen Trapezcrimp, einen modifizierten Trapezcrimp, einen Ovalcrimp, einen Dorncrimp oder einen Zweidorncrimp handeln. Ein offener Crimp kann bspw. als V-Crimp oder B-Crimp, als Rollcrimp oder als Doppelrollcrimp ausgebildet sein.

Zusätzlich zur Herstellung der elektrischen Verbindung zwischen Leiter und Stecker mittels des Leitercrimps kann eine mechanische Verbindung mittels des Isolationscrimps hergestellt werden. Hierbei kann ein geschlossener Isolationscrimp oder ein offener Isolationscrimp (insbesondere V-Crimp oder B-Crimp, O-Crimp oder OV-Crimp) Einsatz finden. Hinsichtlich weiterer Informationen
- zur Ausgestaltung einer gattungsgemäßen Crimpzange,
- zu möglichen Einsatzbereichen der gattungsgemäßen Crimpzange und/oder
- zu unterschiedlichen möglichen Typen von Crimpverbindungen, welche mittels der gattungsgemäßen Crimpzange hergestellt werden können,
wird auf das Werk
- "Crimptechnik, Herstellung prozesssicherer Verbindungen von elektrischen Leitern und Steckern" der WEZAG GmbH Werkzeugfabrik, Die Bibliothek der Technik 342, Verlag Moderne Industrie, ISBN 978-3-68236-027-7
verwiesen.

### STAND DER TECHNIK

Die Druckschrift DE 10 2007 050 176 A1 beschreibt, dass bei dem Crimpen eines Steckers mit einem elektrischen Kabel mittels einer Crimpzange die zunehmende Komplexität von Kabelbäumen, eine verschärfte Produkthaftung und erhöhte Garantieanforderungen eine Qualitätssicherung durch Überwachung der Crimpkraft erfordern. Vorgeschlagen wird eine Kraftmesseinrichtung, welche als piezoelektrischer Kraftsensor oder als Dehnmessstreifen ausgebildet sein kann. Die Kraftmesseinrichtung ist auf einer Außenseite eines Crimpstempels oder auch innerhalb des Crimpstempels oder in einer Crimpaufnahme angeordnet. Des Weiteren verfügt die Crimpzange über einen Sender, der oberhalb des Crimpstempels am Crimpzangenkopf angebracht ist. Der Sender sendet ein drahtloses Crimpkraftsignal aus, welches von einer Empfangs- und Auswertereinrichtung empfangen und ausgewertet wird. Der Sender kann über Bedienelemente ein- und ausgeschaltet werden. Des Weiteren kann über diese Bedienelemente unter Umständen die Frequenz des Senders eingestellt werden. In den Sender ist eine Energiequelle in Form einer elektrischen Batterie oder eines aufladbaren Akkumulators zur Energieversorgung des Senders und der Kraftmesseinrichtung vorgesehen. Auch vorgeschlagen wird, dass der Sender über eine Induktionsspule verfügen kann, in welcher ein äußeres Magnetfeld einen Induktionsstrom erzeugen kann, um den Akkumulator aufzuladen. Ebenfalls vorgeschlagen wird, dass an der Crimpzange eine Solarzelle montiert ist zur Aufladung des Akkumulators. Schließlich wird auch vorgeschlagen, dass eine temporäre Kabelverbindung vorhanden ist. Der Sender besitzt eine Anzeigevorrichtung, an welcher die Crimpkraft, die Sendefrequenz, das Bestehen einer drahtlosen Verbindung, der Ladezustand der Energiequelle u. ä. angezeigt werden kann. Die Anzeigevorrichtung kann als LED- oder LCD-Anzeigevorrichtung ausgebildet sein. Zusätzlich kann an der Crimpzange ein Wegmesssystem zur Erfassung des Arbeitshubs der Crimpzange vorgesehen sein. Um Beschädigungen zu vermeiden, kann die Crimpzange über eine Ratschen- oder Durchrutsch-Einrichtung verfügen, welche die applizierbare Crimpkraft auf einen vorgegebenen Wert begrenzt. Des Weiteren wird vorgeschlagen, dass die Empfangs-Auswertevorrichtung als handelsüblicher PC mit einem Bluetooth-Empfänger ausgebildet ist.

Die Druckschrift DE 298 06 179 U1 beschreibt als aus DE 40 14 221 A1 bekannt, in einer Crimppresse die Qualität der erstellten Crimpverbindung durch Erfassung der Crimpkraft zu überwachen. Hierzu ist der Crimpstempel, die Crimpform oder der Unterbau als Federkörper ausgebildet, an dem ein Dehnungsmessstreifen angebracht ist. Der Weg des Crimpstempels wird über einen induktiven Wegaufnehmer erfasst. Die Druckschrift schlägt vor diesem Hintergrund die Erfassung einer Crimpkraft und des Crimpweges auch an einer Crimpzange vor. Hierzu wird ein erster Kraftsensor eingesetzt, welcher unmittelbar die Crimpkraft im Zangenmaul erfasst. Ein zweiter Kraftsensor erfasst den Öffnungsweg der Maulöffnung, so dass über diesen mittelbar die Erfassung eines Crimpweges erfolgt. Als Kraftsensoren werden hier Dehnungsmessstreifen oder piezoelektrische Kraftsensoren eingesetzt. Hierbei kann ein Dehnungsmessstreifen auf einer Blattfeder angebracht werden, welche bei der Schließbewegung der Crimpzange gespannt wird. Vorgeschlagen wird auch, dass der erste Kraftsensor an einem Zwischenteil in einem Hebelantrieb der Crimpzange angebracht ist oder der erste Kraftsensor bei daran befestigtem Crimpeinsatz zwischen dem Crimpeinsatz und der Zangenbacke liegt. Zur Temperaturkompensation kann ein Referenzsensor eingesetzt werden. An der Crimpzange kann eine Auswerteschaltung vorgesehen sein mit einer geeigneten Anzeige, um den Benutzer der Crimpzange während des Crimpens über die Qualität des Crimpverlaufs zu informieren. Auch ein Datenspeicher kann an der Crimpzange vorgesehen sein, in welchem für unterschiedliche Arten von Crimpungen, insbesondere verschiedene Kontakttypen, Kraft-Weg-Verläufe gespeichert werden können, so dass für eine spezielle Crimpung der zugeordnete Kraft-Weg-Verlauf bei der Qualitätsüberwachung zur Verfügung steht. Als optische Anzeigeeinrichtung an der Crimpzange kann eine Leuchtdiodenanzeige oder eine Flüssigkristallanzeige Einsatz finden. Ergänzend kann eine Signalausgabe über eine akustische Ausgabeeinrichtung erfolgen. Findet eine aus Leuchtdioden bestehende optische Anzeigevorrichtung oder eine akustische Ausgabeeinrichtung Einsatz, kann über diese die erfolgreiche Durchführung eines Crimpvorgangs durch unterschiedliche Farben oder Töne bestätigt werden. Als Schnittstelle für einen stationären Rechner kann eine kabelgebundene oder optische Schnittstelle sowie jede mögliche über Luft übertragene Schnittstelle eingesetzt werden, welche elektromagnetische Strahlung im sichtbaren, infraroten oder Radio-Bereich zum Datenaustausch nutzt. Hierbei kann es sich auch um eine bidirektionale Schnittstelle handeln. Möglich ist auch, dass die Schließbewegung des Zangenmauls bei der Crimpzange über einen elektrischen Servomotor unterstützt wird. Die Überwachung des Crimpkraftverlaufs kann darin bestehen, dass der gemessene Crimpkraftverlauf mit einem vorbestimmten Crimpkraftverlauf, ggf. mit einem vorgegebenen Toleranzbereich, verglichen wird.

Das Patent DE 10 2004 009 489 B4 nennt die Druckschriften US 5, 195, 042, DE 298 06 179, DE 199 32 962 und DE 697 00 589 als relevanten Stand der Technik hinsichtlich des Einsatzes von Weg-Kraft-Messsystemen in der Crimptechnik und betrifft eine elektronische Überwachung eines Einstellvorganges einer Crimpzange.

In der Patentanmeldung DE 10 2008 030 773 A1 werden die Druckschriften DE 40 14 221, DE 43 37 796, DE 199 32 962, DE 29 806 179.1 und US-PS 5 490 406 als relevanter Stand der Technik hinsichtlich vorbekannter elektronischer Einrichtungen zur Kraft-Weg-Messung in Crimpzangen genannt. Auch diese Patentanmeldung DE 10 2008 030 773 A1 betrifft die elektronische Überwachung eines Einstellvorganges der Crimpzange. Hierbei kommt ein Sensorsystem zum Einsatz, welches absolut oder inkremental einen Crimpweg erfasst. Über eine Steuer-, Überwachungs- und Auswerteinheit kann eine elektronische Anzeige an einer LCD-Anzeige erzeugt werden. Einsatz finden kann eine Kassette, in welche ein Rechnersystem sowie eine der Aufnahme- und Einstelleinrichtung dienende Baueinheit mit dem Sensorsystem integriert sein kann. Baueinheiten können in eine bereits fertig montierte Zange ein- und ausgebaut werden mit einer Auswechslung jeweils im Bedarfsfall.

Das europäische Patent EP 2 043 818 B1 betrifft die Ausstattung einer handbetätigten Zange mit einer Signaleinrichtung, welche das Erreichen einer vorgegeben Schließkraft für die Hand des Benutzer fühlbar macht. Hierbei ist die Signaleinrichtung als in einem Handhebel integrierter Vibrator ausgebildet.

Die Druckschrift EP 2 698 885 A1 offenbart eine nicht gattungsgemäße Crimpmaschine, in welcher unterschiedliche Wechseladapter Einsatz finden können. Die Wechseladapter verfügen jeweils über einen Stempel sowie einen Amboss. In die Wechseladapter ist des Weiteren jeweils ein Sensor integriert, über welchen eine Erfassung einer Crimpkraft und/oder eine Erfassung eines Crimpwegs erfolgt. Hierbei können in den Wechseladaptern jeweils Sensoren mit unterschiedlichen Messbereichen für unterschiedliche Anwendungen Einsatz finden. Ein Kraftsensor kann in eine Ausnehmung des Ambosses oder des Stempels des Wechseladapters integriert sein. Eine Verformung des Ambosses oder des Stempels soll dann zu einer Beaufschlagung des in der Ausnehmung angeordneten Sensors mit einer Kraft führen. In diesem Fall sollen die elastisch verformbaren Bereiche des Ambosses oder des Stempels der Abstützung über den Sensor mechanisch parallelgeschaltet sein. Eine Kalibrierung der Wechseladapter und der Kraftsensoren derselben kann werkseitig oder nach Auslieferung des Wechseladapters erfolgen. Ermittelte Kalibrierfaktoren oder Kalibrierkurven können in einer in den Wechseladapter integrierten Steuereinheit modelliert oder abgelegt werden.

Die Druckschrift EP 3 396 796 A1 schlägt vor, in einer Crimpzange beide Zangenbacken über ein Schwenklager an einem festen Zangenteil, welches einen festen Handhebel ausbildet, abzustützen. Eine Zangenbacke wird durch eine manuelle Betätigung eines beweglichen Handhebels über einen Kniehebeltrieb über den Crimphub von einer Öffnungsstellung in einer Schließstellung bewegt. Die andere Zangenbacke ist über eine mechanische Parallelschaltung einerseits einer als Elastomerkörper ausgebildeten Feder und andererseits über einen Crimpzangen-Kraftsensor an dem festen Zangenteil abgestützt, so dass der Kraftfluss der Crimpkraft aufgeteilt wird in zwei Teilkraftflüsse mit zwei Crimpkraftkomponenten. Dies hat zur Folge, dass der Crimpzangen-Kraftsensor nicht mit der gesamten Crimpkraft beaufschlagt wird, sondern nur mit einer Crimpkraftkomponente, womit die Anforderungen an den Crimpzangen-Kraftsensor hinsichtlich der maximal zulässigen Kraft reduziert werden können. Der Crimpzangen-Kraftsensor basiert dabei auf einer (insbesondere halbkugelförmigen) elastischen Kalotte, welche mit der auf den Crimpzangen-Kraftsensor wirkenden Crimpkraftkomponente gegen eine Sensorfläche gedrückt wird. Die Größe oder der Durchmesser der Kontaktfläche zwischen der elastischen Kalotte und der Sensorfläche ist dabei von der Crimpkraftkomponente abhängig. Die Größe der Kontaktfläche wird mittels einer Reihe oder Matrix von in der Sensorfläche angeordneten Kontakten oder Schaltern erfasst, wobei die Zahl der betätigten Kontakte oder Schalter mit der Größe der Kontaktfläche korreliert. Aus der derart erfassten Größe der Kontaktfläche kann dann über die Verformungscharakteristik der Kalotte die Crimpkraftkomponente und aus der a-priori bekannten Abhängigkeit der Crimpkraftkomponente von der Crimpkraft die Crimpkraft bestimmt werden.

US 2008/0078255 A1 offenbart eine nicht gattungsgemäße Crimpmaschine mit einem an einem Amboss gehaltenen Gesenk und einem an einem Stempel gehaltenen Gesenk, wobei der Stempel an einem Rahmen der Crimpmaschine geführt ist. In dem Amboss verläuft die Crimpkraft über eine Sensoreinrichtung, bei der eine piezoelektrische Polymerfolie sandwichartig zwischen zwei Platten aufgenommen ist. Die piezoelektrische Polymerfolie weist vorzugsweise Polyvinylidenfluorid (PVDF) auf. Mittels der piezoelektrischen Polymerfolie soll die Crimpkraft während des maschinellen Crimpprozesses gemessen werden. Um den Einfluss von Fehlausrichtungen der Gesenke oder des Stempels und des Ambosses zu vermeiden, kann der Kraftfluss über zwei in mechanischer Parallelschaltung angeordnete piezoelektrische Polymerfolienelemente verlaufen. Durch Einsatz der piezoelektrischen Polymerfolie soll gemäß US 2008/0078255 A1 der Einsatz eines Montagebolzens entbehrlich gemacht werden, wie dieser für Kraftsensoren in Ausgestaltung als Sensorringe erforderlich ist. Andererseits soll die piezoelektrische Polymerfolie oder die Polymerfolienelemente zu einem verringerten Fehlereinfluss bei einer nicht exakten axialen Beaufschlagung, Verkippungen und Beaufschlagungen mit einem Biegemoment, wie dies für kristallische oder keramische Sensoren der Fall ist, vermeiden.

Weiterer Stand der Technik ist aus DE 10 2015 107 302 A1 bekannt.

Die den nächstliegenden Stand der Technik bildende Druckschrift EP 3 820 001 A1 offenbart einen Crimpzangen-Kraftsensor, bei dem eine Piezofolie zwischen ebenen und parallelen Kontaktflächen eines Abstützkörpers und eines Übertragungskörpers angeordnet ist. Die Piezofolie kann lose zwischen dem Abstützkörper und dem Übertragungskörper angeordnet sein, zwischen diesen verklemmt sein oder mit dem Abstützkörper und/oder dem Übertragungskörper verklebt sein. Der Abstützkörper ist schwenkbar um eine Schwenkachse, die vertikal zur Schwenkebene der Zangenbacken orientiert ist, an dem festen Zangenteil der Crimpzange gelagert. An dem Übertragungskörper ist ein Gesenkrücken eines auswechselbaren Gesenkes abgestützt. Hierbei weist das Gesenk ein in Richtung der Crimpachse orientiertes Langloch auf, durch welche sich ein von dem festen Zangenteil gehaltener Halte- und Führungsbolzen erstreckt. Der Halte- und Führungsbolzen gewährleistet einerseits, dass das Gesenk verliersicher an dem festen Zangenteil gehalten ist. Andererseits gewährleistet der Eingriff des Halte- und Führungsbolzens in das Langloch, dass die Gesenkhälfte einen begrenzten Freiheitsgrad in Richtung der Crimpachse aufweist, der erforderlich ist, um die Piezofolie mit der Crimpkraft zu beaufschlagen. Die Piezofolie ist über ein Verbindungskabel mit einer Elektronik-Baueinheit der Crimpzange verbunden. Eine Signalverarbeitung und Auswertung der Signale der Piezofolie und damit eine Ermittlung der Crimpkraft erfolgt in der Elektronik-Baueinheit. Die Piezofolie kann zwischen dem Übertragungskörper und dem Abstützkörper zu mindestens zwei Lagen mit gleichen Sensorflächen gefaltet sein. Beide Sensorflächen werden dann mit der Crimpkraft und der zugeordneten Flächenpressung beaufschlagt, womit die durch die Crimpkraft hervorgerufene Ladungsänderung der Piezoelemente der Piezofolie vergrößert wird und die Sensitivität des Crimpzangen-Kraftsensors erhöht werden kann.

### AUFGABE DER ERFINDUNG

Der Erfindung liegt die Aufgabe zugrunde, einen Crimpzangen-Kraftsensor sowie eine Crimpzange mit einem derartigen Crimpzangen-Kraftsensor vorzuschlagen, der oder die insbesondere hinsichtlich
- des Bau- und/oder Montageaufwandes und/oder
- der Beanspruchungen des Crimpzangen-Kraftsensors und/oder
- der Gestaltung des elektrischen Messkreises und/oder
- der Auswertung und Verarbeitung des Messsignals
verbessert ist.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt einen Crimpzangen-Kraftsensor vor, der einen Übertragungskörper, einen Abstützkörper und mindestens eine zwischen dem Übertragungskörper und dem Abstützkörper angeordnete Piezofolie aufweist, wobei insoweit der Crimpzangen-Kraftsensor grundsätzlich entsprechend dem Stand der Technik, insbesondere entsprechend dem eingangs genannten Stand der Technik (bspw. EP 3 820 001 A1), ausgebildet sein kann.

Erfindungsgemäß wird eine besonders einfache Gewährleistung der Verbindung oder Führung zwischen dem Übertragungskörper und dem Abstützkörper vorgeschlagen: Der Übertragungskörper und der Abstützkörper verfügen über Vorsprünge und Rücksprünge. Zur Vereinfachung wird im Folgenden teilweise die Erfindung erläutert auf Grundlage von Vorsprüngen des Abstützkörpers und Rücksprüngen des Übertragungskörpers, wobei durchaus möglich ist, dass die Vorsprünge an dem Übertragungskörper und die Rücksprünge an dem Abstützkörper vorgesehen sind oder der Abstützkörper und der Übertragungskörper jeweils mindestens einen Vorsprung und einen Rücksprung aufweisen.

Erfindungsgemäß sind der Übertragungskörper und der Abstützkörper über die Vorsprünge und Rücksprünge in einer Ebene, die quer zur Crimpkraft orientiert ist, geführt. Gleichzeitig gewährleisten die Vorsprünge und Rücksprünge einen Freiheitsgrad zwischen dem Übertragungskörper und dem Abstützkörper in Richtung der Crimpkraft, der erforderlich ist, um die zwischen dem Übertragungskörper und dem Abstützkörper angeordnete Piezofolie mit der Crimpkraft zu beaufschlagen. Möglich ist, dass der Übertragungskörper in der Querebene im Bereich der Rücksprünge zwischen den Vorsprüngen des Abstützkörpers gefangen ist, wobei hier durchaus ein gewisses Spiel vorgesehen sein kann. Möglich ist dabei, dass lediglich zwei Vorsprünge des Abstützkörpers mit zwei Rücksprüngen des Übertragungskörpers zusammenwirken, womit dann eine Führung in eine Querrichtung oder auch eine Führung in orthogonale Querrichtungen gewährleistet werden kann. Durchaus möglich ist aber auch, dass der Abstützkörper drei oder vier Vorsprünge aufweist, zwischen denen dann der Übertragungskörper im Bereich der Rücksprünge in unterschiedliche Querrichtungen gefangen sein kann.

Die vorliegende Erfindung beruht insbesondere auf der Erkenntnis, dass eine verschwenkbare Lagerung des Übertragungskörpers zur Führung desselben gemäß EP 3 396 796 B1 aufwendig ist und zusätzlichen Bauraum, zusätzliche Kosten und Montageaufwand erfordert, der durch die erfindungsgemäßen Maßnahmen eingespart werden kann. Andererseits beruht die Erfindung auch auf der Erkenntnis, dass das reine Halten des Übertragungskörpers an dem Abstützkörper über die Verklebungen mit der Piezofolie gemäß EP 3 820 001 A1 dazu führen kann, dass zwischen Übertragungskörper und Abstützkörper in der Querebene wirkende Kräfte die Piezofolie beaufschlagen, was zu Messfehlern und/oder einer Beschädigung der Piezofolie führen kann.

Für eine besonders einfache erfindungsgemäße Ausgestaltung ist der Übertragungskörper ausschließlich über die Verklebungen mit der mindestens einen Piezofolie sowie die Wechselwirkung der Vorsprünge und Rücksprünge an dem Abstützkörper gehalten, während keine weiteren Halteverbindungen des Übertragungskörpers mit anderen Bauelementen der Crimpzange vorhanden sind.

Weist der Abstützkörper in Richtung der Crimpkraft orientierte Vorsprünge auf, können die Vorsprünge einen beliebigen Querschnitt aufweisen, wobei dann die Geometrie der Rücksprünge des Übertragungskörpers entsprechend angepasst sein können. Beispielsweise ist möglich, dass die Vorsprünge Zapfen des Abstützkörpers mit einem kreisförmigen Querschnitt sind, die in als Bohrungen des Übertragungskörpers ausgebildeten Rücksprüngen Aufnahme finden.

Für einen besonderen Vorschlag weisen die Vorsprünge des Abstützkörpers einen rechteckigen Querschnitt auf. Möglich ist, dass der Übertragungskörper als Übertragungsplatte ausgebildet ist, so dass eine sehr einfache Fertigung des Übertragungskörpers möglich ist, wobei dann u. U. auch die Planparallelität der Kontaktfläche der Übertragungsplatte mit dem Gesenkrücken des Gesenkes und der Kontaktfläche für die Piezofolie auf einfache Weise gewährleistet werden kann. In diesem Fall können die Rücksprünge als rechtwinklige Eckausschnitte (die nicht durch "Ausschneiden" hergestellt sein müssen, sondern mit einem beliebigen Herstellungsverfahren hergestellt sein können) der Ecken einer rechteckigen Übertragungsplatte ausgebildet sein. Die Schenkel der rechtwinkligen Eckausschnitte treten dann in Wechselwirkung mit zwei benachbarten Seiten der rechteckigen Querschnitte der Vorsprünge des Abstützkörpers, womit die erläuterte Führung gewährleistet werden kann.

Möglich ist somit, dass im Rahmen der Erfindung die Rücksprünge in der Querebene einen randoffenen Querschnitt aufweisen( wie dies bspw. für die erläuterten Eckausschnitte der Fall ist), während ebenfalls möglich ist, dass die Rücksprünge in einem Querschnitt in der Querebene einen randgeschlossenen Querschnitt aufweisen (wie dies bspw. für die erläuterten Führungsbohrungen für die Aufnahme der zylindrischen Zapfen der Fall ist).

Durchaus möglich ist, dass sich die Piezofolie in der Querebene lediglich in einem Bereich innerhalb der Vorsprünge und Rücksprünge erstreckt. Für einen besonderen Vorschlag verfügt auch die mindestens eine Piezofolie über Rücksprünge. Durch diese Rücksprünge können sich dann die Vorsprünge des Übertragungskörpers oder Abstützkörpers hindurch in die Rücksprünge des Abstützkörpers oder Übertragungskörpers erstrecken. Dies hat den Vorteil, dass die Piezofolie und die Kontaktflächen derselben mit dem Übertragungskörper und dem Abstützkörper eine größere Fläche aufweisen können, womit eine Beanspruchung der Piezofolie reduziert werden kann und/oder die Messgenauigkeit erhöht werden kann.

Für eine erfindungsgemäße Ausgestaltung des Crimpzangen-Kraftsensors verfügt dieser über eine flexible Leiterbahn, wovon auch eine sogenannte Flexplate-Platine umfasst ist. Sofern im Folgenden auf weitere Komponenten der flexiblen Leiterbahn verwiesen wird, kann es sich um in die Leiterbahn integrierte Komponenten oder an dieser angebrachte Komponenten handeln. So kann bspw. die mindestens eine Piezofolie auf der flexiblen Leiterbahn angeordnet sein. Sind zwei wirksame Abschnitte der Piezofolie vorhanden, können diese beabstandet an der flexiblen Leiterbahn vorgesehen sein mit einem dazwischen angeordneten Faltbereich der Leiterbahn, im Bereich dessen dann ein Falten der Leiterbahn mit den beiden Abschnitten der Piezofolie erfolgt, um zwei Lagen der Piezofolie im Kraftfluss zwischen dem Übertragungskörper und dem Abstützkörper vorsehen zu können.

Möglich ist, dass die flexible Leiterbahn zusätzlich zu der mindestens Piezofolie in einem anderen Abschnitt derselben eine elektronische Steuereinheit aufweist. Vorzugsweise wertet die elektronische Steuereinheit ein Messsignal der mindestens einen Piezofolie aus. Dies kann unter Berücksichtigung einer für die mindestens eine Piezofolie spezifischen Abhängigkeit erfolgen. Beispielsweise kann die Abhängigkeit ein Kalibrierfaktor sein, über den das Messsignal der mindestens einen Piezofolie in die Crimpkraft (oder eine entsprechende oder normierte Größe) umgerechnet werden kann. Möglich ist aber auch, dass jede andere Art oder Modellierung einer Abhängigkeit, beispielsweise eine lineare oder nicht lineare Kalibrierfunktion, ein Kalibrierkennfeld u. ä., von der elektronischen Steuereinheit berücksichtigt wird.

Möglich ist dabei, dass die elektronische Steuereinheit eine Abhängigkeit berücksichtigt, die dieselbe ist für eine Vielzahl von Crimpzangen-Kraftsensoren. Dies hat allerdings den Nachteil, dass die Messungenauigkeiten der Piezofolie sowie Fertigungsungenauigkeiten des Crimpzangen-Kraftsensors so gering gehalten werden müssen, dass für mehrere Crimpzangen-Kraftsensoren mit ein- und derselben Abhängigkeit eine Ermittlung der Crimpkraft aus dem Messsignal mit der erforderlichen Genauigkeit möglich ist. Das Entsprechende kann für die Einbauumgebung des Crimpzangen-Kraftsensors in die Crimpzange gelten. Eine Verringerung der Anforderungen kann unter Umständen dadurch herbeigeführt werden, dass hingenommen wird, dass für unterschiedliche Crimpzangen-Kraftsensoren infolge der Herstellungsungenauigkeiten oder Schwankungen des Messverhaltens der Piezofolien für dieselben Crimpkräfte oder dieselben Crimpkraftverläufe unterschiedliche Messsignale entstehen. Diese für jeden Crimpzangen-Kraftsensor und/oder jede Einbauumgebung des Crimpzangen-Kraftsensors in die Crimpzange spezifischen unterschiedlichen Messsignale werden dann dadurch berücksichtigt, dass die elektronische Steuereinheit jeweils eine für den jeweiligen Crimpzangen-Kraftsensor spezifische Abhängigkeit berücksichtigt. Hierbei kann diese spezifische Abhängigkeit für jeden einzelnen Crimpzangen-Kraftsensor beispielsweise bei dem Hersteller des Crimpzangen-Kraftsensors oder durch einen von dem Benutzer mit der Crimpzange durchgeführten Kalibrierprozess ermittelt werden. Im Rahmen der Erfindung kann die Abhängigkeit, insbesondere die spezifische Abhängigkeit, auf einer Speichereinheit gespeichert werden, die ebenfalls auf oder in der flexiblen Leiterbahn angeordnet sein kann.

Die Erfindung schlägt des Weiteren vor, dass die flexible Leiterbahn mit einem Stecker verbunden ist. Über diesen Stecker kann der Crimpzangen-Kraftsensor beispielsweise mit einer Elektronik-Baueinheit der Crimpzange verbunden werden.

Grundsätzlich kann im Rahmen der Erfindung die flexible Leiterbahn des Crimpzangen-Kraftsensors eine beliebige Breite, Dicke, einen beliebigen Schichtaufbau und eine beliebige Geometrie aufweisen. Für einen Vorschlag der Erfindung weist die flexible Leiterbahn einen ersten Schenkel und einen zweiten Schenkel auf. Die beiden Schenkel sind über eine (eckige oder abgerundete) Abwinklung miteinander verbunden.

Die beiden Schenkel können dabei dem Zweck dienen, dass im Bereich der Schenkel unterschiedliche elektronische Komponenten angeordnet werden. So kann beispielsweise im Bereich eines ersten Schenkels die mindestens eine Piezofolie, eine elektronische Steuereinheit und/oder eine Speichereinheit angeordnet sein. Hingegen kann in dem Bereich des zweiten Schenkels, hier in dem der Abwinklung abgewandten Endbereich, der zuvor genannte Stecker angeordnet sein.

Andererseits können die unterschiedlichen Schenkel der flexiblen Leiterbahn der Einbausituation des Crimpzangen-Kraftsensors in die Crimpzange Rechnung tragen, wobei sich dann die unterschiedlichen Schenkel in unterschiedliche Richtungen in der Crimpzange erstrecken können. Möglich ist beispielsweise, dass in dem eingebauten Zustand die beiden Schenkel im Bereich der Abwinklung zueinander gefaltet sind und sich dann in dem gefalteten Zustand in unterschiedlichen Ebenen der Crimpzange erstrecken.

Eine weitere Lösung der der Erfindung zugrunde liegenden Aufgabe stellt eine Crimpzange dar, die mit einem Crimpzangen-Kraftsensor ausgestattet ist, wie dieser zuvor erläutert worden ist. Die Crimpzange weist dabei ein festes Zangenteil auf, das integral einen festen Handhebel ausbildet oder diesen trägt. An dem festen Zangenteil ist der Abstützkörper gehalten. Hierbei kann der Abstützkörper auch verschwenkbar über einen Schwenkbolzen um eine Schwenkachse, die quer zur Schwenkebene der Zangenbacken und der Handhebel orientiert ist, an dem festen Zangenteil gelagert sein, wie dies insbesondere in EP 3 820 001 A1 beschrieben ist. Möglich ist aber auch, dass der Abstützkörper fest oder mit einem Spiel an dem festen Zangenteil gehalten ist, was auch durch zwei Querbolzen des Abstützkörpers erfolgen kann, die in Aufnahmebohrungen des festen Zangenteils gehalten sind. Die Crimpzange verfügt über einen Kniehebeltrieb, bei dem ein Druck- oder Kniehebel des Kniehebeltriebs an dem festen Zangenteil abgestützt ist. Über den Kniehebeltrieb ist ein beweglicher Handhebel mit einer beweglichen Zangenbacke verbunden.

Für einen Vorschlag der Erfindung erstreckt sich der erste Schenkel der Leiterbahn mit seiner Längsachse in einer Längsebene der Crimpzange. Hingegen erstreckt sich der zweite Schenkel der Leiterbahn mit seiner (dann u. U. gekrümmten) Längsachse in einer Querebene der Crimpzange. Dies kann dadurch erfolgen, dass eine Faltung oder eine Umbiegung der Leiterbahn vorhanden ist, die die unterschiedlichen Erstreckungen gewährleistet. Für diesen Vorschlag kann beispielsweise der erste Schenkel eine Übertragung des Messsignals von der Piezofolie in einem vorderen Endbereich der Zangenbacken zu einer Elektronik-Baueinheit der Crimpzange, die weiter hinten an dem ersten Schenkel angeordnet sein kann, gewährleisten. Hingegen ermöglicht der zweite Schenkel, dass eine Verbindung des ersten Schenkels, der beispielsweise in einem oberen Endbereich des Zangenkopfes verläuft, über den Stecker mit einer Schnittstelle der Elektronik-Baueinheit erfolgen kann. Durch die Abwinklung der beiden Schenkel und die Faltung sowie Umbiegung können vorhandene Bauräume für die unterschiedlichen Funktionen und die Übertragung der elektrischen Signale genutzt werden.

Für eine erfindungsgemäße Crimpzange weist die Crimpzange eine Elektronik-Baueinheit auf, die über zwei Platinen verfügt. Die Platinen sind auf unterschiedlichen Seiten eines Zangenkopfes der Crimpzange angeordnet. Die Platinen auf den unterschiedlichen Seiten können dann über eine Verbindungsleiterbahn miteinander verbunden sein. In diesem Fall erstreckt sich die Verbindungsleiterbahn in einem Querschnitt der Crimpzange in einem Gehäuse der Elektronik-Baueinheit um das feste Zangenteil herum, um die beiden Platinen zu verbinden. Auch der zweite Schenkel der Leiterbahn des Crimpzangen-Kraftsensors erstreckt sich in einem Querschnitt der Crimpzange innerhalb des Gehäuses der Elektronik-Baueinheit um das feste Zangenteil herum. Hierbei können die Verbindungsleiterbahn und die Leiterbahn zumindest teilweise in demselben Umfangsabschnitt des Querschnitts angeordnet sein, wobei die Verbindungsleiterbahn und die Leiterbahn auch in Längsrichtung der Crimpzange versetzt angeordnet sein können.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Explosionsdarstellung einen Abstützkörper, einen Übertragungskörper und eine flexible Leiterbahn eines Crimpzangen-Kraftsensors.
- **Fig. 2**: zeigt eine weitere räumliche Explosionsdarstellung des Abstützkörpers, des Übertragungskörpers und einen Teilabschnitt der flexiblen Leiterbahn gemäß Fig. 1.
- **Fig. 3**: zeigt den Crimpzangen-Kraftsensor gemäß Fig. 1 und 2. in montiertem Zustand bei an dem Übertragungskörper anliegendem Gesenk.
- **Fig. 4**: zeigt eine Crimpzange in einer teilgeschnittenen oder teildemontierten Ansicht von links.
- **Fig. 5**: zeigt die Crimpzange gemäß Fig. 4 in einer räumlichen Ansicht von hinten schräg von rechts.
- **Fig. 6**: zeigt die Crimpzange gemäß Fig. 5 und 6 in teildemontiertem oder teilgeschnittenem Zustand in einer Ansicht von links.
- **Fig. 7**: zeigt die Crimpzange gemäß Fig. 4 bis 6 in einer grundsätzlich Fig. 6 entsprechenden Darstellung, wobei hier aber eine Elektronik-Baueinheit vollständig montiert ist.

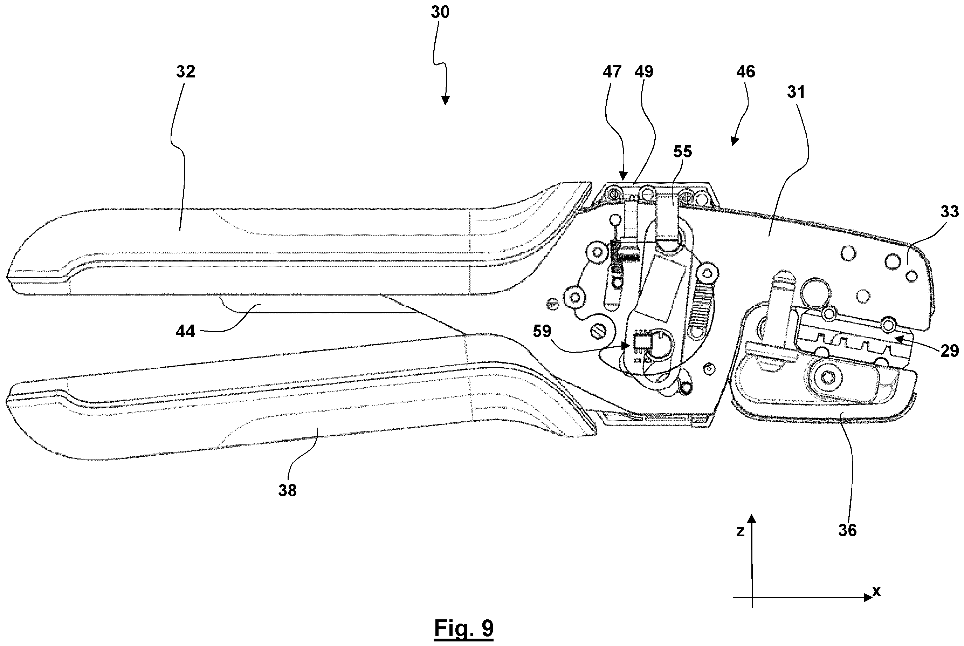

- **Fig. 8 und 9**: zeigen die Crimpzange gemäß Fig. 4 bis7 in einer Ansicht von rechts in teildemontiertem oder teilgeschnittenem Zustand, wobei Fig. 8 die Crimpzange in einer (teilweisen) Öffnungsstellung zeigt und Fig. 9 die Crimpzange in einer Schließstellung zeigt.

### FIGURENBESCHREIBUNG

In dem Anmeldungstext und den Ansprüchen wird teilweise für Bauelemente, die sich hinsichtlich Funktion und/oder Geometrie entsprechen oder ähneln, dieselbe Bezugszahl verwendet, wobei diese Bauelemente dann mit dem ergänzenden Buchstaben a, b, ... voneinander unterschieden sein können. Es kann dann auf diese Bauelemente Bezug genommen werden mit oder den ergänzenden Buchstaben, womit dann ein Bauelement, eine beliebige Zahl der Bauelemente oder sämtliche Bauelemente gemeint sein können.

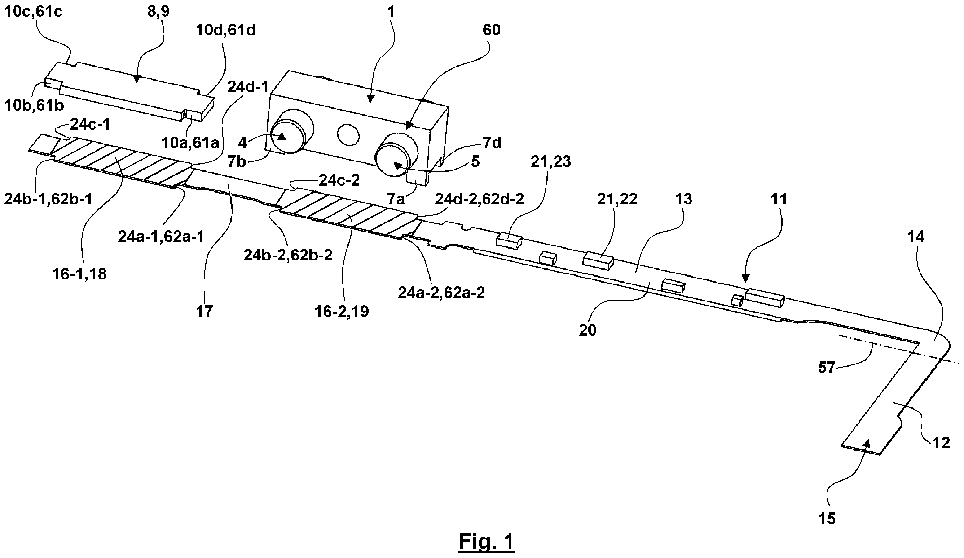

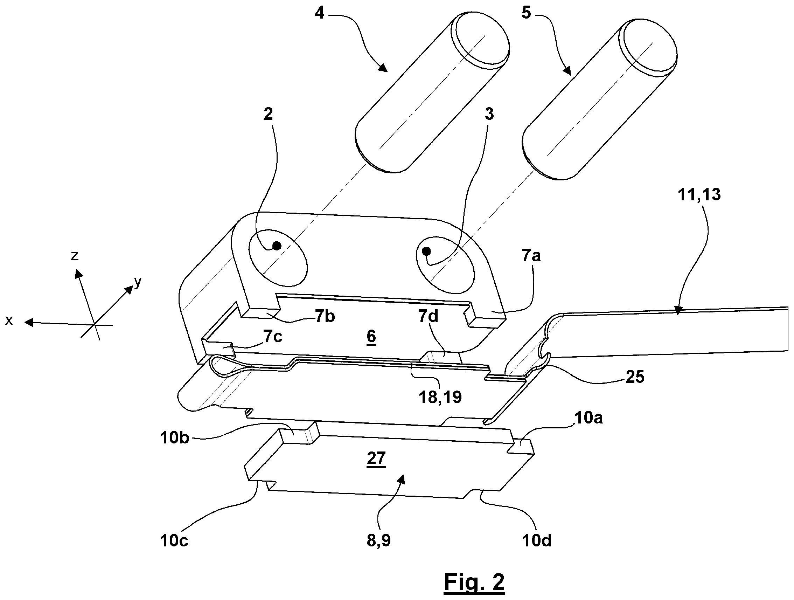

**Fig. 1** **und** **2** zeigen einen Abstützkörper 1, der in ersten grober Näherung quaderförmig ausgebildet ist. Der Abstützkörper 1 verfügt über quer zu einer Zangenkopfebene orientierte Durchgangsbohrungen 2, 3, durch die sich (insbesondere mit einer Presspassung) Haltebolzen 4, 5 erstrecken, wobei die Haltebolzen 4, 5 mit beiden Endbereichen aus dem Abstützkörper 1 hervorstehen.

Auf der Unterseite, die in montiertem Zustand einem Gesenk der Crimpzange zugewandt ist, bildet der Abstützkörper 1 eine großflächige Kontaktfläche 6 aus, gegenüber welcher im Bereich der Ecken Vorsprünge 7a, 7b, 7c, 7d hervortreten. Die Vorsprünge 7 erstrecken sich mit ihrer Längsachse parallel zur Crimpachse. Die Vorsprünge 7 haben für das dargestellte Ausführungsbeispiel einen konstanten rechteckigen Querschnitt. Die Kontaktfläche 6 des Abstützkörpers 1 ist grundsätzlich rechteckig ausgebildet, wobei allerdings die Ecken des Rechtecks im Bereich der Vorsprünge 7 rechtwinklige Eckausschnitte aufweisen.

Ein Übertragungskörper 8 ist hier als Übertragungsplatte 9 ausgebildet. Die Geometrie der Übertragungsplatte 9 entspricht grundsätzlich der Geometrie der Kontaktfläche 6 des Abstützkörpers 1, wobei aber ein gewisses Spiel zwischen den rechtwinkligen Eckausschnitten 10a, 10b, 10c, 10d der Übertragungsplatte 9 und den Vorsprüngen 7a, 7b ,7c, 7d des Abstützkörpers 1 ausgebildet wird, wenn die Übertragungsplatte 9 zwischen die Vorsprünge 7 in den Abstützkörper 1 eingesetzt wird. In dem montierten Zustand ist die Übertragungsplatte 9 schwimmend zwischen den Vorsprüngen 7 des Abstützkörpers 1 geführt, so dass eine Relativbewegung in Richtung der Crimpachse möglich ist, während (nach der Überwindung eines geringen Spiels) Querkräfte, die quer zu der Crimpachse wirken, diese Relativbewegung führen.

Eine Leiterbahn 11 (die ein Leiterband sein kann) ist mit zwei langgestreckten Schenkeln 12, 13 gebildet, im Bereich welcher die Leiterbahn 11 eine geringfügig variierende Breite aufweisen kann. Die beiden Schenkel 12, 13 sind in einer Draufsicht auf die Leiterbahn 11 in deren abgeplattetem Zustand über eine Abwinklung 14 miteinander verbunden.

In dem der Abwinklung 14 abgewandten Endbereich des Schenkels 12 verfügt der Schenkel 12 über einen Stecker 15.

Der Schenkel 13 der Leiterbahn 11 verfügt über zwei in Fig. 1 schraffiert dargestellte Folienbereiche 16. In der Beschreibung sind die einzelnen Folienbereiche durch den Zusatz "-1" bzw. "-2" voneinander unterschieden, wobei diese Zusätze dann auch für Kennzeichnung der Eckausschnitte 24 der Folienbereiche 16-1, 16-2 sowie der Piezofolien 18, 19 verwendet werden. In den Folienbereichen 16-1 und 16-2 bildet die Leiterbahn 11 die Piezofolien 18, 19 aus oder trägt diese. Des Weiteren verfügt der Schenkel 13 der Leiterbahn 11 über einen Faltbereich 17, über den die Folienbereiche 16-1, 16-2 miteinander verbunden sind, und einen Elektronikbereich 20, im Bereich dessen elektronische Bauelemente 21, insbesondere eine elektronische Steuereinheit 22 und eine elektronische Speichereinheit 23, angeordnet sind.

Mittels der elektronischen Bauelemente 21 erfolgt in dem Elektronikbereich 20 eine Verarbeitung und Auswertung des von den Piezofolien 18, 19 bereitgestellten Messsignals, so dass bereits ein kalibriertes oder normiertes Crimpkraftsignal an den Stecker 15 übertragen werden kann.

In Fig. 1 ist zu erkennen, dass der Folienbereich 16-1 und die Piezofolie 18 über Eckausschnitte 24a-1, 24b-1, 24c-1 und 24d-1 verfügen, die den Eckausschnitten 10a, 10b, 10c, 10d der Übertragungsplatte 9 entsprechen. Dasselbe gilt für Eckausschnitte 24a-2, 24b-2, 24c-2 und 24d-2 des Folienbereichs 16-2 und der Piezofolie 19.

In Fig. 2 ist zu erkennen, dass für die Montage des Crimpzangen-Kraftsensors die Leiterbahn 11 im Bereich des Faltbereichs 17 um 180° quer zu der Erstreckungsebene der Leiterbahn 11 und quer zur Längserstreckung des Schenkels 13 gefaltet, hier umgebogen ist, so dass die beiden Folienbereiche 16-1, 16-2 und Piezofolien 18, 19 sandwichartig und deckungsgleich aufeinander aufliegen.

Die der Kontaktfläche 6 zugewandte Seite eines Folienbereichs 16-2 und der Piezofolie 19 kann mit der Grundfläche 6 verklebt sein, die beiden Lagen, die mit den Folienbereichen 16 und den Piezofolien 18, 19 gebildet sind, können miteinander verklebt sein und die Übertragungsplatte 9 kann mit einem Folienbereich 16-1 und der Piezofolie 18 verklebt sein. Die erläuterte Geometrie der Grundfläche 6, der Folienbereiche 16, der Piezofolien 18, 19 und der Übertragungsplatte 9 gewährleistet, dass eine vollflächige Übertragung der Crimpkraft jeweils über eine Fläche erfolgt, die im Wesentlichen der Fläche der Kontaktfläche 6 entspricht. Somit erfolgt die Übertragung der Crimpkraft nicht lediglich innenliegend von den Vorsprüngen 7, sondern auch in den Randbereichen zwischen benachbarten Vorsprüngen 7.

Möglich ist, dass in einem Einbauzustand der Leiterbahn 11 in die Crimpzange die Leiterbahn 11 eine beliebige Kröpfung 25 aufweist.

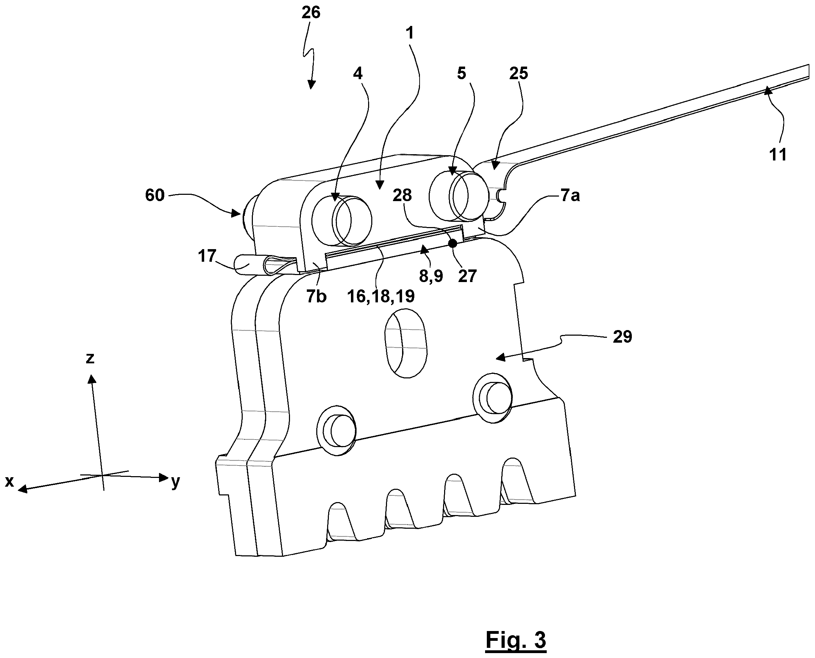

**Fig. 3** zeigt den mit dem Abstützkörper 1, der Leiterbahn 11 mit den Piezofolien 18, 19 und der Übertragungsplatte 9 gebildeten Crimpzangen-Kraftsensor 26, wobei an einer Kontaktfläche 27, die die Übertragungsplatte 9 auf der den Piezofolien 18, 19 abgewandten Seite ausbildet, ein Gesenkrücken 28 einer Gesenkhälfte 29 anliegt und mit der Crimpkraft angepresst wird.

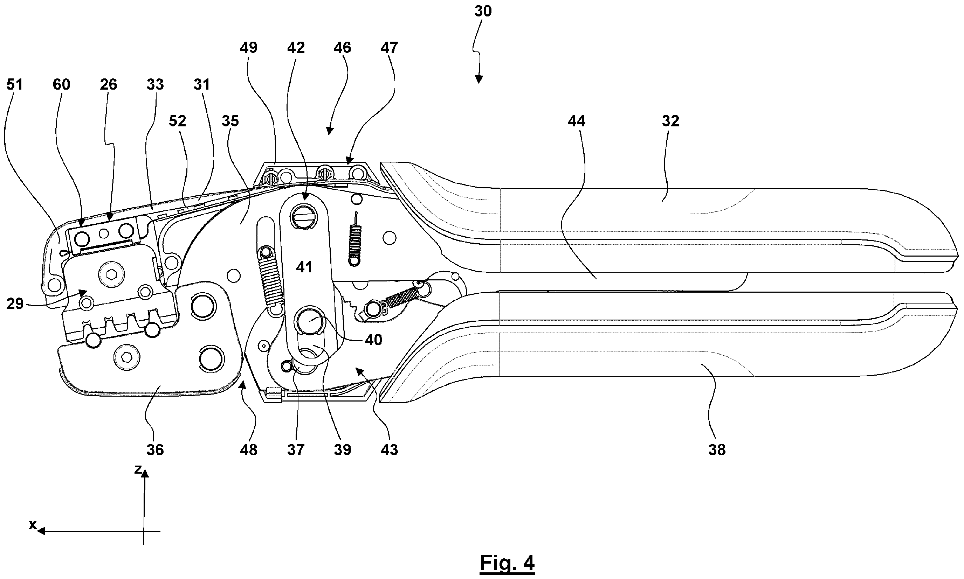

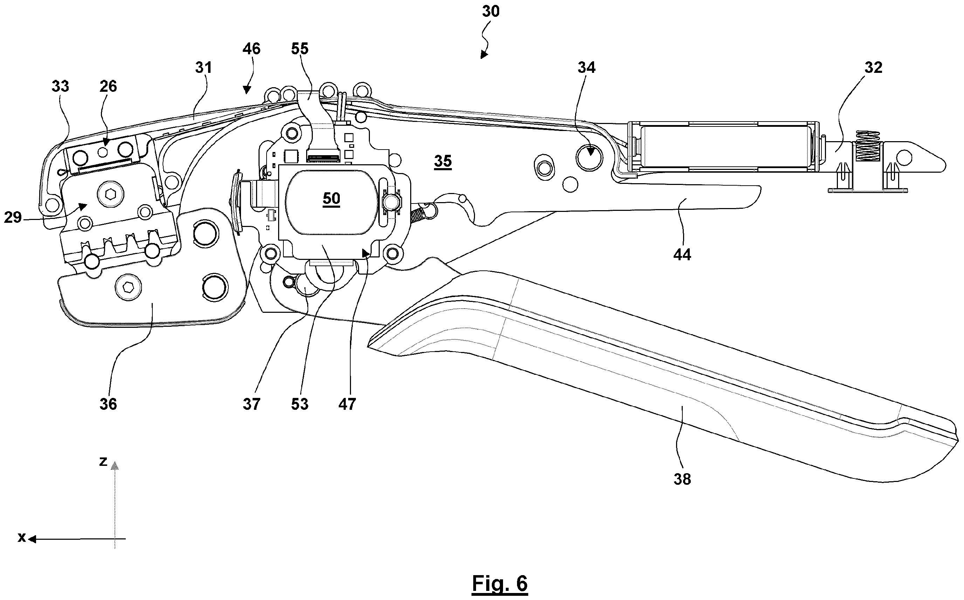

**Fig. 4** zeigt eine Crimpzange 30. Die Crimpzange 30 weist ein festes Zangenteil 31 auf. Das feste Zangenteil 31 verfügt über einen festen Handhebel 32 sowie eine feste Zangenbacke 33. An dem festen Zangenteil 31 ist über ein Schwenklager 34 (vgl. Fig. 6) ein bewegliches Zangenteil 35 mit einer beweglichen Zangenbacke 36 gelagert. In einem Schwenklager 37 ist an dem festen Zangenteil 31 ein beweglicher Handhebel 38 verschwenkbar gelagert. Eine Kröpfung des beweglichen Handhebels 38 im Bereich des Schwenklagers 37 bildet einen ersten Kniehebel 39. Der Kniehebel 39 ist über ein Kniegelenk 40 mit einem zweiten Kniehebel 41, der als Druckhebel ausgebildet ist, verschwenkbar verbunden. Der dem Kniegelenk 40 abgewandte Endbereich des zweiten Kniehebel 41 ist über ein Schwenklager 42 an dem festen Zangenteil 31 gelagert.

In der geschlossenen Stellung der Crimpzange 30 gemäß Fig. 4 befindet sich der derart gebildete Kniehebeltrieb 43 in seiner Strecklage, so dass der Öffnungswinkel der beiden Kniehebel 39, 41 nahe der gestreckten Lage (insbesondere 170° bis 180° oder 175° bis 179°) ist. Hingegen verringert sich für die Öffnung der Crimpzange der Öffnungswinkel der Kniehebel 39, 41.

Als eine optionale Besonderheit verfügt die Crimpzange 30 über einen dritten Handhebel 44. Hinsichtlich der Funktion des dritten Handhebels 44 sowie der Integration in die Crimpzange 30 und der mittels des dritten Handhebels 44 bereitgestellten erweiterten Funktionalität sowie der unterschiedlichen eingesetzten Federn wird auf die Druckschrift EP 3 614 507 B1 verwiesen.

Für das dargestellte Ausführungsbeispiel ist das bewegliche Zangenteil 35 mit einem Grundkörper und einem L-förmigen Zangenbackenteil 45 ausgebildet, hinsichtlich dessen auf die Druckschrift EP 3 553 900 B1 verwiesen wird.

Im Bereich eines Zangenkopfes 46, der von der Crimpzange 30 abseits der Handhebel 32, 38 gebildet ist, und hier zwischen den Handhebeln 32, 38 und den Zangenbacken 33, 36 ist eine Elektronik-Baueinheit 47 angeordnet. Die Elektronik-Baueinheit 47 umgibt ein mechanisches Zangenteil 48, welches die Bauelemente für die Mechanik der Crimpzange aufweist, zumindest über einen Teilumfang, insbesondere U-förmig oder in der Art eines geschlossenen Rings. Die Elektronik-Baueinheit 47 verfügt über ein Gehäuse 49 vorzugsweise aus Kunststoff, welche an das mechanische Zangenteil 48 angesetzt und hieran befestigt ist, insbesondere unter Abdichtung nach außen. In einem Innenraum, der von dem mechanischen Zangenteil 48 und dem Gehäuse 49 begrenzt ist, sind elektronische Komponenten angeordnet. Hinsichtlich der Elektronik-Baueinheit 47, insbesondere der Form, der Verbindung derselben mit dem mechanischen Zangenteil 48, der Funktionen, der Steuerlogik, einer Integration einer Anzeigeeinrichtung und/oder den unterschiedlichen von der Elektronik-Baueinheit 47 an der Anzeigeeinrichtung 50 erzeugten Anzeigen wird auf die Druckschrift EP 3 572 188 B1 verwiesen.

Die Elektronik-Baueinheit 47 kann Teil eines Netzwerks sein und mit einer Rechnereinheit, die unter Umständen auch über ein öffentliches oder verschlüsseltes Netz mit einer Cloud-Rechnereinheit kommuniziert, kommunizieren und Daten austauschen. Diesbezüglich und hinsichtlich der ausgetauschten Daten, der Auswertung von Messsignalen, der Abgabe von Empfehlungen für die verwendeten Gesenke in Verbindung mit unterschiedlichen Typen von Werkstücken und/oder der Berücksichtigung von Sollkraftkennlinien wird auf die Druckschrift EP 3 656 504 A1 verwiesen.

In diesem Rahmen kann auch eine Erfassung einer Identifizierung einer Gesenkhälfte und/oder eines Typs eines Werkstücks über eine Kamera erfolgen, wie dies insbesondere in der Druckschrift EP 3 572 187 A2 beschrieben wird.

In Fig. 4 ist auch die Integration des Crimpzangen-Kraftsensors 26 in den Zangenkopf 46 zu erkennen. Die feste Zangenbacke 33 verfügt über Deckplatten, die jeweils in eine Richtung vertikal zu der Zangenkopfebene gemäß Fig. 4 einen Aufnahmeraum 51 begrenzen. In dem Aufnahmeraum 51 sind die Übertragungsplatte 9, die Piezofolien 18, 19 und der Abstützkörper 1, der an den Eckplatten gehalten ist, aufgenommen. Der Aufnahmeraum 51 ist in Richtung der beweglichen Zangenbacke 36 offen, so dass von hier die Gesenkhälfte 29 in den Aufnahmeraum 51 eingesetzt werden kann bis zur Anlage des Gesenkrückens 28 an der Kontaktfläche 27 der Übertragungsplatte 9. In die anderen Richtungen ist der Aufnahmeraum 51 durch Rippen oder Wände, die sich vertikal zur Zangenkopfebene gemäß Fig. 4 erstrecken, grundsätzlich verschlossen. Allerdings verfügt der Aufnahmeraum 51 über einen ebenfalls von den Rippen oder Wänden begrenzten Austrittskanal 52, der sich zu der Elektronik-Baueinheit 47 erstreckt. In dem Austrittskanal 52 ist die Leiterbahn 11, hier der Elektronikbereich 20 des Schenkels 13, angeordnet. Die Längsachse des Elektronikbereichs 20 erstreckt sich somit ungefähr parallel (mit einem Winkel, der kleiner ist als 30°, kleiner ist als 20° oder kleiner ist als 10°) zu der Längsachse der Crimpzange 30. Hierbei ist die Breiten- oder Querrichtung des Schenkels 13 der Leiterbahn 11 vertikal zur Zangenkopfebene, also vertikal zu der Zeichenebene gemäß Fig. 4 und der Ebene, in welcher die bewegliche Zangenbacke 36 und der bewegliche Handhebel 38 verschwenkt werden, orientiert.

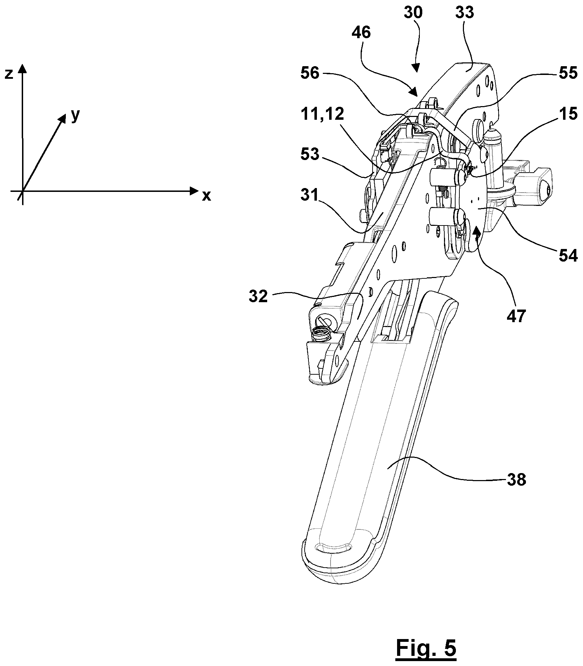

In **Fig. 5** ist die Elektronik-Baueinheit 47 ohne das Gehäuse 49 dargestellt. Zu erkennen sind hier die beiden Platinen 53, 54. Die Platinen 53, 54 sind über eine Verbindungsleiterbahn 55 (insbesondere ein Verbindungsleiterband) miteinander verbunden. Die Verbindungsleiterbahn 55 ist in dem außenliegend von dem Gehäuse 49 und innenliegend von dem mechanischen Zangenteil 48 begrenzten Innenraum angeordnet und erstreckt sich in einem Querschnitt x-z in Umfangsrichtung in erster Näherung U-förmig um das mechanische Zangenteil 48 herum.

Zu erkennen ist des Weiteren, dass das mechanische Zangenteil 48 eine Öffnung 56 aufweist, aus der der Schenkel 12 der Leiterbahn 11 aus dem mechanischen Zangenteil 48 und dem Austrittskanal 52 heraustritt. Der Stecker 15 des Schenkels 12 der Leiterbahn 11 ist dann, wie in Fig. 5 ersichtlich, mit einer Schnittstelle der Platine 54 verbunden, so dass eine Übertragung des Messsignals oder Kraftsignals von dem Crimpzangen-Kraftsensor 26 an die Elektronik-Baueinheit 47 möglich ist.

In den Figuren ist ein kartesisches Koordinatensystem x,y,z dargestellt. In diesem Koordinatensystem entspricht die Koordinate y (ungefähr) der Längsachse der Crimpzange 30, die Koordinate x entspricht einer Querachse, die quer zur Zangenkopfebene orientiert ist und die Achse z entspricht einer Höhenrichtung der Crimpzange. Die Ebene y-z ist parallel zu der Zangenkopfebene orientiert und in dieser Ebene werden der bewegliche Handhebel 38 und die bewegliche Zangenbacke 36 verschwenkt. Der Schenkel 13 der Leiterbahn 11 erstreckt sich mit seiner Haupterstreckungsebene parallel zur x-y-Ebene, während die Längsachse des Schenkels 13 in der y-z-Ebene verläuft, vorzugsweise ungefähr parallel zur Längsachse y. Im Bereich der Abwinklung 14 oder in dem Anfangsbereich des Schenkels 12 ist in dem eingebauten Zustand die Leiterbahn 11 mit einer Umbiegung oder Faltung 57 versehen, so dass sich der Schenkel 12 in z-Richtung aus der Öffnung 56 heraus erstreckt. Durch weitere Faltungen oder Umbiegungen folgt der Schenkel 12 der Außenkontur des mechanischen Zangenteils 48 zu der Platine 54. In dem montierten Zustand gemäß Fig. 5 erstreckt sich somit die Breiten- oder Quererstreckung des Schenkels 12 parallel zur y-Achse oder Längsachse, während die Längserstreckung des Schenkels 12 in grober Näherung entsprechend einem umgekehrten U innerhalb der X-Z-Ebene verläuft.

In **Fig. 6** ist zu erkennen, dass die Platine 53 eine Anzeigeeinrichtung 50 aufweist.

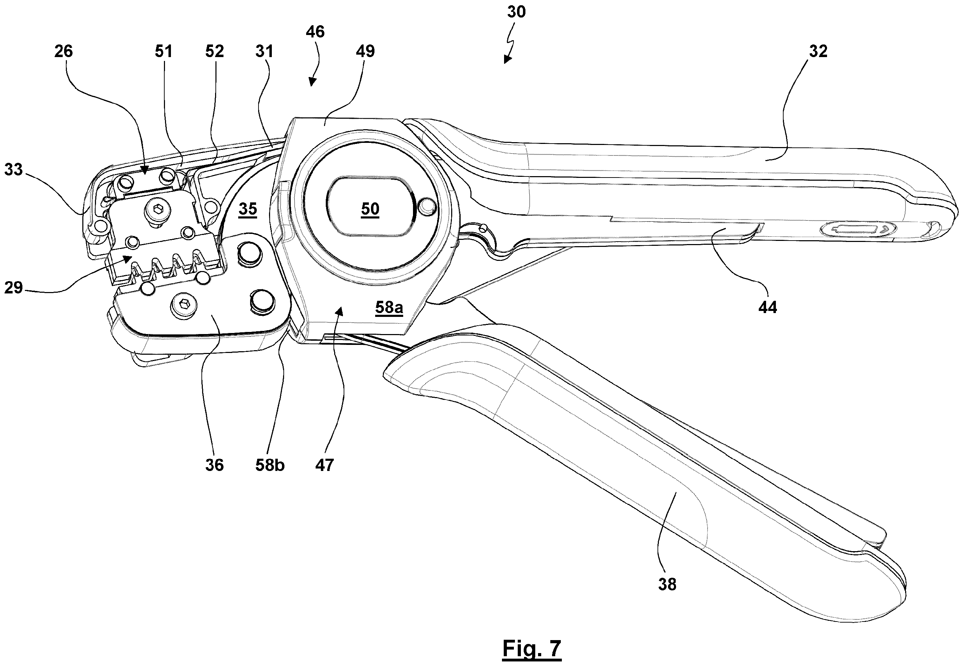

**Fig. 7** zeigt die Elektronik-Baueinheit 47 bei montiertem Gehäuse 49, welches hier zwei Halbschalen 58a, 58b aufweist, die das mechanische Zangenteil 48 ringförmig umschließen.

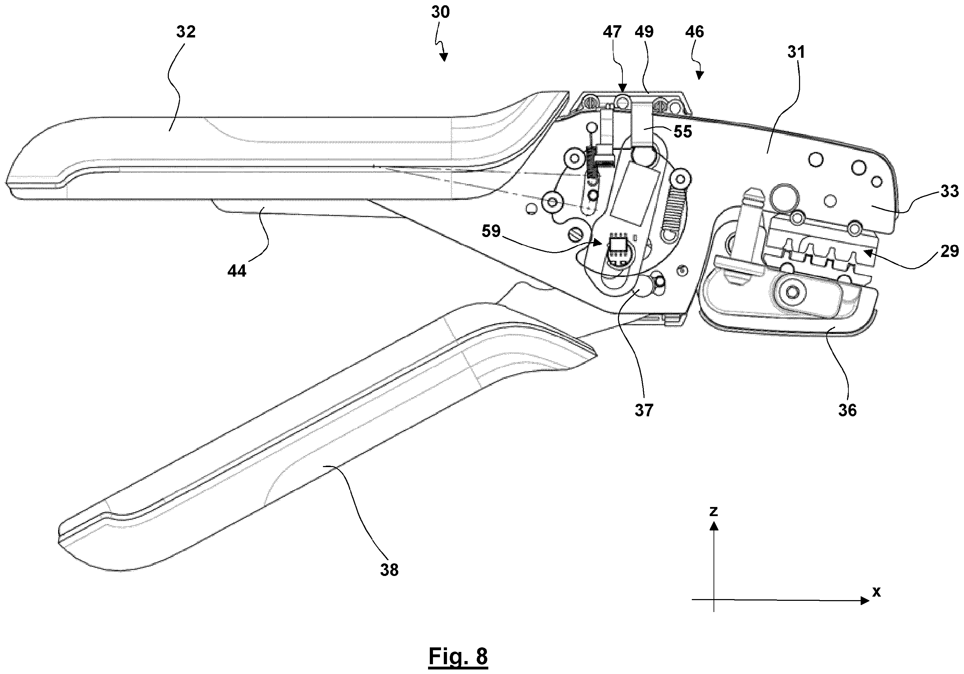

In **Fig. 8** ist zu erkennen, dass die Crimpzange 30 auch einen Wegsensor 59 aufweist. In diesem Fall trägt der zweite Kniehebel 41 oder das Kniegelenk 40 ein erstes Wegsensorelement, während die Platine 54 ein zweites Wegsensorelement trägt. Der Wegsensor 59 erfasst eine Relativbewegung der beiden Wegsensorelemente über den Crimphub.

Die Haltebolzen 4, 5 bilden eine Befestigungsbereich 60 aus, über den der Abstützkörper 1 an dem festen Zangenteil 31 verschwenkbar oder starr befestigt ist.

Die Eckausschnitte 10, 24 bilden Rücksprünge 61, 62.

Die Elektronik-Baueinheit 47 kann über eine elektronische Steuereinheit, ein Eingabeelement wie einen Schalter, einen Taster u. ä., ein Ausgabeelement oder ein Display, eine Leuchte, ein akustisches Ausgabeelement oder einen Sensor verfügen. Bei dem Sensor handelt es sich insbesondere um einen Wegsensor 59. Für das dargestellte Ausführungsbeispiel weist der Wegsensor 59 ein an einer Platine der Elektronik-Baueinheit 47 angeordnetes erstes Sensorelement sowie ein zweites, an dem Kniehebel 41 gehaltenes Sensorelement auf. Der Wegsensor 59 erfasst in diesem Fall die Relativbewegung der Sensorelemente über den Crimphub. Vorzugsweise ist auf gegenüberliegenden Seiten des mechanischen Zangenteils jeweils eine (Teil-)Platine 53, 54 angeordnet, die dann über eine Verbindungsleiterbahn 55 miteinander verbunden sein können.

Die Elektronik-Baueinheit 47 kann zwei halbschalenartige Gehäuseteile aufweisen, die sich in montiertem Zustand in der Art eines Rings in Umfangsrichtung geschlossen um das mechanische Zangenteil erstrecken. Das Gehäuse 49 der Elektronik-Baueinheit 47 kann einen für Licht durchlässigen oder teildurchlässigen Teilbereich aufweisen. In diesem Fall kann im Inneren des Gehäuses 49 eine Leuchte angeordnet sein, die so angeordnet und ausgerichtet ist, dass von der Leuchte emittiertes Licht den durchlässigen oder teildurchlässigen Teilbereich beaufschlagt und zumindest teilweise durchdringt. Die elektronische Steuereinheit kann Steuerlogik aufweisen, die einen Ladezustand einer Batterie oder eines Akkumulators auswertet, eine Zahl von durchlaufenden Arbeitshüben ermittelt oder auswertet, eine Bewertung eines mit der Crimpzange durchgeführten Crimpprozesses vornimmt, Daten speichern kann, in einem Standby-Modus bei einer über einen Beschleunigungssensor erkannten Bewegung der Crimpzange einen Bereitschaftsmodus aktivieren kann, bei einer Erfassung, dass für eine vorgegebene erste Zeitspanne keine Betätigung der Crimpzange erfolgt ist oder für eine vorgegebene zweite Zeitspanne keine Bewegung der Crimpzange erfolgt ist, ein Display oder eine Leuchte deaktivieren, wobei die erste Zeitspanne länger sein kann als die zweite Zeitspanne, eine drahtlose Sende- und/oder Empfangseinrichtung betreiben, mittels einer Leuchte den Ladezustand einer Batterie oder eines Akkumulators anzeigen, eine Konfiguration der Crimpzange mit dem Aufspielen von Betriebsparametern ermöglicht, das Erreichen einer Schließstellung der Handhebel erfassen, eine Ortungsfunktion für die Ortung der Crimpzange steuern, eine Diebstahlsicherung der Crimpzange steuern, indem diese außer Funktion gesetzt werden kann, eine akustische Ausgabe der Crimpzange steuern, eine elektronische Einlegekontrolle für eine Kontrolle des bestimmungsgemäßen Einlegens eines Werkstücks in das Zangenmaul durchführen und/oder an einer Anzeige eine Anzeige erzeugen, welche ein Name oder eine Kennzeichnung eines Herstellers, eines Besitzers oder eines Benutzers sein kann, ein Ladezustand einer Batterie oder eines Akkumulators sein kann, eine gemessene Crimpkraft oder ein gemessener Crimpweg oder ein Verlauf derselben sein kann, eine Zahl der durchlaufenden Arbeitshübe sein kann, das Ergebnis einer Bewertung eines mit der Crimpzange durchgeführten Crimpprozesses sein kann und/oder ein Hinweis hinsichtlich einer erforderlichen Wartung der Crimpzange sein kann oder hiermit korrelieren kann. Hinsichtlich der Ausgestaltung der Elektronik-Baueinheit, deren Wechselwirkung mit dem mechanischen Zangenteil der Crimpzange und den mittels der Elektronik-Baueinheit gewährleisteten Funktionen wird verwiesen auf die Patentschrift EP 3 572 188.

Möglich ist des Weiteren, dass die Crimpzange über die Elektronik-Baueinheit drahtlos mit einer externen elektronischen Steuereinheit, insbesondere einem Smartphone oder einem Rechner in der Arbeitsumgebung der Crimpzange, kommuniziert, während ergänzend möglich ist, dass diese externe elektronische Steuereinheit wiederum mit einem Cloud-Speicher kommuniziert. Diese Kommunikationswege können insbesondere zur Dokumentation der Crimpprozesse, der eingesetzten Gesenke, der Crimpkraftverläufe und/oder der Crimpwege, der Zahl der von der Crimpzange oder einem Gesenk durchlaufenden Crimphube u. ä. verwendet werden.

Möglich ist auch, dass die Elektronik-Baueinheit oder die Crimpzange eine Erfassungseinrichtung aufweist, welche zur Erfassung einer Kennzeichnung der Gesenkhälfte(n) eingerichtet ist. Diese Erfassungseinrichtung kann benachbart der Gesenkhälfte angeordnet sein. Bei der Erfassungseinrichtung kann es sich um eine Leseeinrichtung für eine Kennzeichnung in Form einer optischen Codierung einer Gesenkhälfte, eine mechanische Abtasteinrichtung für eine mechanische Kontaktkontur der Gesenkhälfte, eine Empfangseinheit für den Empfang einer Kennzeichnung von einer RFID-Einheit der Gesenkhälfte oder eine Erfassungseinrichtung für eine Kennzeichnung mittels einer induktiven Kopplung zwischen der Gesenkhälfte und der Erfassungseinrichtung handeln. Die Kennzeichnung der Gesenkhälfte kann eine Kennzeichnung des Typs der Gesenkhälfte, eine eindeutige spezifische Kennzeichnung der Gesenkhälfte und/oder eine Authentifizierung der Gesenkhälfte sein. Möglich ist, dass über die zuvor genannten Kommunikationswege nach Erfassung einer Kennzeichnung einer Gesenkhälfte eine Liste von Werkstücken erstellt wird, die mittels der erfassten Gesenkhälfte vercrimpt werden können, wobei diese Typen von Werkstücken dann an einer Anzeige der Crimpzange oder an der externen elektronischen Steuereinheit angezeigt werden können. Möglich ist auch, dass neben der Erfassung der Gesenkhälfte über die Kennzeichnung auch ein Typ eines Werkstücks, beispielsweise über eine Bilderkennung auf Grundlage eines Kamerabilds, erfolgt. In diesem Fall kann mittels der Steuerlogik der Elektronik-Baueinheit 47 und/oder der externen elektronischen Steuereinheit geprüft werden, ob die erkannte Gesenkhälfte geeignet ist für ein Vercrimpen des erkannten Typs des Werkstücks, was dann dem Benutzer optisch oder akustisch an der Crimpzange oder der externen elektronischen Steuereinheit zur Kenntnis gebracht werden kann. Hinsichtlich dieser und weiterer Ausgestaltungsmöglichkeiten der Erfassungseinrichtung für eine Kennzeichnung einer Gesenkhälfte und die Kommunikation der Crimpzange mit einer externen elektronischen Steuereinheit und unter Umständen über diese mit einem Cloud-Speicher und Möglichkeiten der Auswertung und Bestimmung geeigneter Kombinationen von Gesenkhälften und Werkstücken wird Bezug genommen auf die Patentschrift 3 656 504 B1.

### BEZUGSZEICHENLISTE

- 1: Abstützkörper
- 2: Durchgangsbohrung
- 3: Durchgangsbohrung
- 4: Haltebolzen
- 5: Haltebolzen
- 6: Kontaktfläche
- 7: Vorsprung
- 8: Übertragungskörper
- 9: Übertragungsplatte
- 10: Eckausschnitt
- 11: Leiterbahn
- 12: Schenkel
- 13: Schenkel
- 14: Abwinklung
- 15: Stecker
- 16: Folienbereich
- 17: Faltbereich
- 18: Piezofolie
- 19: Piezofolie
- 20: Elektronikbereich
- 21: Elektronisches Bauelement
- 22: elektronische Steuereinheit
- 23: elektronische Speichereinheit
- 24: Eckausschnitt
- 25: Kröpfung
- 26: Crimpzangen-Kraftsensor
- 27: Kontaktfläche
- 28: Gesenkrücken
- 29: Gesenkhälfte
- 30: Crimpzange
- 31: festes Zangenteil
- 32: fester Handhebel
- 33: feste Zangenbacke
- 34: Schwenklager
- 35: bewegliches Zangenteil
- 36: bewegliche Zangenbacke
- 37: Schwenklager
- 38: beweglicher Handhebel
- 39: erster Kniehebel
- 40: Kniegelenk
- 41: zweiter Kniehebel
- 42: Schwenklager
- 43: Kniehebeltrieb
- 44: dritter Handhebel
- 45: Zangenbackenteil
- 46: Zangenkopf
- 47: Elektronik-Baueinheit
- 48: mechanisches Zangenteil
- 49: Gehäuse
- 50: Anzeigeeinrichtung
- 51: Aufnahmeraum
- 52: Austrittkanal
- 53: Platine
- 54: Platine
- 55: Verbindungsleiterbahn
- 56: Öffnung
- 57: Faltung, Umbiegung
- 58: Halbschale
- 59: Wegsensor
- 60: Befestigungsbereich
- 61: Rücksprung
- 62: Rücksprung

## Patentansprüche

1. Crimpzangen-Kraftsensor (26) mit
a) einem Übertragungskörper (8), der eine Kontaktfläche (27) für einen Gesenkrücken (28) einer Gesenkhälfte (29) aufweist,
b) einem Abstützkörper (1), der einen Befestigungsbereich (60) für die Befestigung des Abstützkörpers (1) an einem Zangenteil (31) der Crimpzange (30) aufweist, und
c) mindestens einer zwischen dem Übertragungskörper (8) und dem Abstützkörper (1) angeordneten Piezofolie (18, 19),
**dadurch gekennzeichnet, dass**
d) der Übertragungskörper (8) und der Abstützkörper (1) über Vorsprünge (7), die sich mit ihrer Längsachse parallel zur Crimpachse erstrecken, und Rücksprünge (61) verfügen, über die eine Führung zwischen dem Übertragungskörper (8) und dem Abstützkörper (1) gewährleistet wird und über die
da) der Übertragungskörper (8) und der Abstützkörper (1) in einer Querebene, die quer zur Crimpkraft orientiert ist, geführt sind und
db) ein Freiheitsgrad für eine relative Bewegung des Übertragungskörpers (8) und des Abstützkörpers (1) in Richtung der Crimpkraft bereitgestellt wird.

2. Crimpzangen-Kraftsensor (26) nach Anspruch 1, **dadurch gekennzeichnet, dass**
a) der Abstützkörper (1) in Richtung der Crimpkraft orientierte Vorsprünge (7) aufweist, die vorzugsweise einen rechteckigen Querschnitt aufweisen, und/oder
b) der Übertragungskörper (8) als Übertragungsplatte (9) ausgebildet ist, die die Rücksprünge (61) aufweist, wobei die Rücksprünge (61) vorzugsweise als rechtwinklige Eckausschnitte (10) der Ecken einer rechteckigen Übertragungsplatte (9) ausgebildet sind.

3. Crimpzangen-Kraftsensor (26) nach Anspruch 1 oder 2, **dadurch gekennzeichnet, dass** die mindestens eine Piezofolie (18, 19) über Rücksprünge (62) oder Eckausschnitte (24) verfügt, durch welche sich die Vorsprünge (7) des Übertragungskörpers (8) oder Abstützkörpers (1) hindurch in die Rücksprünge (61) des Abstützkörpers (1) oder Übertragungskörpers (8) erstrecken.

4. Crimpzangen-Kraftsensor (26) nach einem der vorhergehenden Ansprüche, **dadurch gekennzeichnet, dass** eine flexible Leiterbahn (11) vorhanden ist, auf oder in der die mindestens eine Piezofolie (18, 19) angeordnet ist.

5. Crimpzangen-Kraftsensor (26) nach Anspruch 4, **dadurch gekennzeichnet, dass** die flexible Leiterbahn (11) eine elektronische Steuereinheit (22) aufweist, welche ein Messsignal der mindestens einen Piezofolie (18, 19) auswertet, insbesondere unter Berücksichtigung einer für die mindestens eine Piezofolie (18, 19) spezifischen Abhängigkeit, welche in einer auf der flexiblen Leiterbahn (11) angeordneten Speichereinheit (23) gespeichert ist.

6. Crimpzangen-Kraftsensor (26) nach Anspruch 4 oder 5, **dadurch gekennzeichnet, dass** die flexible Leiterbahn (11) mit einem Stecker (15) verbunden ist.

7. Crimpzangen-Kraftsensor (26) nach einem der Ansprüche 4 bis 6, **dadurch gekennzeichnet, dass** die flexible Leiterbahn (11) einen ersten Schenkel (13) und einen zweiten Schenkel (12) aufweist, die über eine Abwinklung (14) miteinander verbunden sind, wobei insbesondere
a) im Bereich eines ersten Schenkels (13) die mindestens eine Piezofolie (18, 19), die elektronische Steuereinheit (22) und/oder die Speichereinheit (23) angeordnet sind/ist und/oder
b) in dem der Abwinklung (14) abgewandten Endbereich des zweiten Schenkels (12) der Stecker (15) angeordnet ist.

8. Crimpzange (30) mit einem Crimpzangen-Kraftsensor (26) nach einem der vorhergehenden Ansprüche, **dadurch gekennzeichnet, dass**
a) die Crimpzange (30) ein festes Zangenteil (31) mit einem festen Handhebel (32) aufweist,
b) an dem festen Zangenteil (31) der Abstützkörper (1) gehalten ist,
c) ein Kniehebeltrieb (43) vorhanden ist, der an dem festen Zangenteil (31) abgestützt ist, und
d) ein beweglicher Handhebel (38) über den Kniehebeltrieb (43) mit einer beweglichen Zangenbacke (36) verbunden ist.

9. Crimpzange (30) nach Anspruch 8 in Rückbeziehung auf Anspruch 7, **dadurch gekennzeichnet, dass** sich
a) eine Längsachse des ersten Schenkels (13) der Leiterbahn (11) in einer Längsebene (y-z-Ebene) der Crimpzange (30) erstreckt und
b) sich die gekrümmte Längsachse des zweiten Schenkels (12) der Leiterbahn (11) in einer Querebene (x-z-Ebene) der Crimpzange (30) und um ein Zangenteil (31) herum erstreckt.

10. Crimpzange (30) nach Anspruch 9, **dadurch gekennzeichnet, dass**
a) die Crimpzange (30) eine Elektronik-Baueinheit (47) aufweist,
b) die Elektronik-Baueinheit (47) zwei Platinen (53, 54) aufweist,
c) die Platinen (53, 54) auf unterschiedlichen Seiten eines Zangenkopfes der Crimpzange (30) angeordnet sind,
d) die Platinen (53, 54) über eine Verbindungsleiterbahn (55) miteinander verbunden sind und
e) sich die Verbindungsleiterbahn (55) und der zweite Schenkel (12) der Leiterbahn (11) in parallelen Querebenen der Crimpzange (30) (x-z-Ebenen) um das feste Zangenteil (31) herum erstrecken.

## Claims

1. Crimping pliers force sensor (26) comprising
a) a transfer body (8) comprising a contact surface (27) for a die back (28) of a die half (29),
b) a supporting body (1) which comprises a mounting portion (60) for mounting the supporting body (1) to a pliers part (31) of the crimping pliers (30) and
c) at least one piezoelectric film (18, 19) arranged between the transfer body (8) and the supporting body (1),
**characterized in that**
d) the transfer body (8) and the supporting body (1) comprise protrusions (7) having longitudinal axes extending parallel to the crimping axis and recesses (61) providing a guidance between the transfer body (8) and the supporting body (1) and by which
da) the transfer body (8) and the supporting body (1) are guided in a transversal plane which is oriented transverse to the crimping force and
db) a degree of freedom for a relative movement between the transfer body (8) and the supporting body (1) in the direction of the crimping force is provided.

2. Crimping pliers force sensor (26) of claim 1, **characterized in that**
a) the supporting body (1) comprises protrusions (7) having an orientation in the direction of the crimping force, the protrusions (7) preferably having a rectangular cross section, and/or
b) the transfer body (8) is embodied as a transfer plate (9) which comprises the recesses (61), the recesses preferably being embodied as rectangular corner cutouts (10) of corners of a rectangular transfer plate (9).

3. Crimping pliers force sensor (26) of claim 1 or 2, **characterized in that** the at least one piezoelectric film (18,19) comprises recesses (62) or corner cutouts (24) through which the protrusions of the transfer body (8) or supporting body (1) extend into the recesses (61) of the supporting body (1) or transfer body (8).

4. Crimping pliers force sensor (26) of one of the preceding claims, **characterized in that** a flexible conducting track or path (11) is provided on which or wherein the at least one piezoelectric film (18, 19) is arranged.

5. Crimping pliers force sensor (26) of claim 4, **characterized in that** the flexible conducting track or path (11) comprises an electronic control unit (22) which processes a measurement signal of the at least one piezoelectric film (18, 19), the processing in particular considering a specific dependency of the at least one piezoelectric film (18, 19), the dependency being stored in a storage unit (23) arranged on the flexible conducting track or path (11).

6. Crimping pliers force sensor (26) of claim 4 or 5, **characterized in that** the flexible conducting track or path (11) is connected to a connector or plug (15).

7. Crimping pliers force sensor (26) of one of claims 4 to 6, **characterized in that** the flexible conducting track or path (11) comprises a first leg (13) and a second leg (12), the first leg (13) and the second leg (12) being connected to each other by an angled section (14), wherein in particular
a) the at least one piezoelectric film (18; 19), the electronic control unit (22) and/or the storage unit (23) are/is arranged in the region of a first leg (13) and/or
b) the plug or connector (15) is arranged in the end portion of the second leg (12) which is arranged remote from the angled section (14).

8. Crimping pliers (30) comprising a crimping pliers force sensor (26) of one of the preceding claims, **characterized in that**
a) the crimping pliers (30) comprise a fixed pliers part (31) with a fixed hand lever (32),
b) the supporting body (1) is held on the fixed pliers part (31),
c) a toggle lever driver (43) is provided which is supported on the fixed pliers part (31) and
d) a moveable hand lever (38) is connected to a moveable pliers jaw (36) by the toggle lever drive (43).

9. Crimping pliers (30) of claim 8 when referring back to claim 7, **characterized in that**
a) a longitudinal axis of the first leg (13) of the conducting track or path (11) extends in a longitudinal plane (y-z-plane) of the crimping pliers (30) and
b) the curved longitudinal axis of the second leg (12) of the conducting track or path (11) extends in a transversal plane (x-z-plane) of the crimping pliers (30) and around a pliers part (31).

10. Crimping pliers (30) of claim 9, **characterized in that**
a) the crimping pliers (30) comprise an electronic constructional unit (47),
b) the electronic constructional unit (47) comprises two printed circuit boards (53, 54),
c) the printed circuit boards (53, 54) are arranged on different sides of a pliers head of the crimping pliers (30),
d) the printed circuit boards (53, 54) are connected to each other by a connecting conducting track or path (55) and
e) the connecting conducting track or path (55) and the second leg (12) of the conducting track or path (11) extend in parallel transversal planes of the crimping pliers (30) (x-z-planes) around the fixed pliers part (31).

## Revendications

1. Capteur de force de pince de sertissage (26) avec
a) un corps de transmission (8) qui présente une surface de contact (27) pour un arrière de matrice (28) d'une moitié de matrice (29),
b) un corps d'appui (1) qui présente une partie de fixation (60) pour la fixation du corps d'appui (1) à une partie de pince (31) de la pince de sertissage (30) et
c) au moins un film piézoélectrique (18, 19) disposé entre le corps de transmission (8) et le corps d'appui (1),
**caractérisé en ce que**
d) le corps de transmission (8) et le corps d'appui (1) disposent de saillies (7) qui s'étendent, avec leur axe longitudinal, parallèlement à l'axe de sertissage, et de renfoncements (61) par l'intermédiaire desquelles un guidage entre le corps de transmission (8) et le corps d'appui (1) est assuré et par l'intermédiaire desquelles
da) le corps de transmission (8) et le corps d'appui (1) sont guidés dans un plan transversal qui est orienté transversalement par rapport à al force de sertissage et
db) un degré de liberté pour un mouvement relatif du corps de transmission (8) et du corps d'appui (1) dans la direction de la force de sertissage est mis à disposition.

2. Capteur de force de pince de sertissage (26) selon la revendication 1, **caractérisé en ce que**
a) le corps d'appui (1) comprend des saillies (7), orientées dans la direction de la force de sertissage, qui présentent de préférence une section transversale rectangulaire et/ou
b) le corps de transmission (8) est conçu comme une plaque de transmission (9) qui comprend les renfoncements (61), dans lequel les renfoncements (61) sont conçus de préférence comme des découpes angulaires (10) des angles d'une plaque de transmission rectangulaire (9).

3. Capteur de force de pince de sertissage (26) selon la revendication 1 ou 2, **caractérisé en ce que** l'au moins un film piézoélectrique (18, 19) dispose de renfoncements (62) ou de découpes angulaires (24) à travers lesquels s'étendent les saillies (7) du corps de transmission (8) ou du corps d'appui (1), dans les renfoncements (61) du corps d'appui (1) ou du corps de transmission (8).

4. Capteur de force de pince de sertissage (26) selon l'une des revendications précédentes, **caractérisé en ce qu'**une piste conductrice flexible (11) est présente, sur ou dans laquelle est disposé l'au moins un film piézoélectrique (18, 19).

5. Capteur de force de pince de sertissage (26) selon la revendication 4, **caractérisé en ce que** la piste conductrice flexible (11) comprend une unité de commande électronique (22) qui analyse un signal de mesure de l'au moins un film piézoélectrique (18, 19), plus particulièrement en tenant compte d'une dépendance spécifique pour l'au moins un film piézoélectrique (18, 19), qui est enregistrée dans une unité d'enregistrement (23) disposée sur la piste conductrice flexible (11).

6. Capteur de force de pince de sertissage (26) selon la revendication 4 ou 5, **caractérisé en ce que** la piste conductrice flexible (11) est reliée avec un connecteur (15).

7. Capteur de force de pince de sertissage (26) selon l'une des revendications 4 à 6, **caractérisé en ce que** la piste conductrice flexible (11) comprend une première branche (13) et une deuxième branche (12) qui sont reliées entre elles par l'intermédiaire d'un coude (14), dans lequel, plus particulièrement
a) au niveau d'une première branche (13), sont disposées l'au moins un film piézoélectrique (18, 19), l'unité de commande électronique (22) et/ou l'unité d'enregistrement (23) et/ou
b) dans la partie d'extrémité de la deuxième branche (12), opposée au coude (14), est disposé le connecteur (15).

8. Pince de sertissage (30) avec un capteur de force de pince de sertissage (26) selon l'une des revendications précédentes, **caractérisé en ce que**
a) la pince de sertissage (30) comprend une partie de pince fixe (31) avec une poignée fixe (32),
b) le corps d'appui (1) est maintenu sur la partie de pince fixe (31),
c) une transmission par levier à genouillère (43) est présent, qui s'appuie contre la partie de pince fixe (31),
d) une poignée mobile (38) est relié, par l'intermédiaire de la transmission par levier à genouillère (43), avec une mâchoire de pince mobile (36).

9. Pince de sertissage (30) selon la revendication 8, en référence à la revendication 7, **caractérisé en ce que**
a) un axe longitudinal de la première branche (13) de la piste conductrice (11) s'étend dans un plan longitudinal (plan y-z) de la pince de sertissage (30) et
b) l'axe longitudinal incurvé de la deuxième branche (12) de la piste conductrice (11) s'étend dans un plan transversal (plan x-z) de la pince de sertissage (30) et autour d'une partie de pince (31).

10. Pince de sertissage (30) selon la revendication 9, **caractérisé en ce que**
a) la pince de sertissage (30) comprend un module électronique (47),
b) le module électronique (47) comprend deux platines (53, 54),
c) les platines (53, 54) sont disposées sur différents côtés d'une tête de pince de la pince de sertissage (30),
d) les platines (53, 54) sont reliées entre elles par l'intermédiaire d'une piste conductrice de liaison (55) et
e) la piste conductrice de liaison (55) et la deuxième branche (12) de la piste conductrice (11) s'étendent dans des plans transversaux parallèles de la pince de sertissage (30) (plans x-z) autour de la partie de pince fixe (31).
